# EUROPÄISCHE PATENTSCHRIFT

(11) **EP 1 980 012 B1**
(45) Veröffentlichungstag und Bekanntmachung des Hinweises auf die Patenterteilung: **30.09.2009**
(21) Anmeldenummer: 07702873.6
(22) Anmeldetag: 18.01.2007
(51) Int. Cl.: H02M 3/07

(54) **SCHALTUNGSANORDNUNG ZUR SPANNUNGSVERSORGUNG UND VERFAHREN**
CIRCUIT ARRANGEMENT FOR VOLTAGE SUPPLY AND METHOD
ARRANGEMENT DE CIRCUIT D ALIMENTATION ÉLECTRIQUE ET PROCÉDÉ

(30) Priorität: 19.01.2006 DE 102006002712
(43) Veröffentlichungstag der Anmeldung: 15.10.2008
(73) Patentinhaber: austriamicrosystems AG, 8141 Unterpremstätten (AT)
(72) Erfinder: SCHATZBERGER, Gregor, A-8052 Graz (AT); WIESNER, Andreas, A-8583 Edelschrott (AT)
(74) Vertreter: Epping - Hermann - Fischer
(86) Internationale Anmeldenummer: PCT/EP2007/000440
(87) Internationale Veröffentlichungsnummer: WO 2007/082756

(56) Entgegenhaltungen:
- EP-A- 0 862 270
- EP-A2- 0 862 260
- US-A1- 5 168 174
- US-A1- 5 483 486
- US-A1- 5 671 179
- US-A1- 5 917 313
- US-A1- 5 926 409
- US-A1- 2003 218 453
- US-A1- 2006 028 854
- US-B1- 6 310 789
- US-B1- 6 717 458
- US-B1- 7 002 381
- ILARIA MOTTA ET AL: "High-Voltage Management in Single-Supply CHE NOR-Type Flash Memories" April 2003 (2003-04), PROCEEDINGS OF THE IEEE, IEEE. NEW YORK, US , XP011065139 ISSN: 0018-9219 Abbildungen 5,10
- SHAFEEU H ET AL: "An improved tuning technique for switched capacitor filters" CIRCUITS AND SYSTEMS, 1994. ISCAS '94., 1994 IEEE INTERNATIONAL SYMPOSIUM ON LONDON, UK 30 MAY-2 JUNE 1994, NEW YORK, NY, USA,IEEE, US, Bd. 2, 30. Mai 1994 (1994-05-30), Seiten 629-632, XP010143118 ISBN: 0-7803-1915-X
- LUBASZEWSKI M ET AL: "A built-in multi-mode stimuli generator for analogue and mixed-signal testing" INTEGRATED CIRCUIT DESIGN, 1998. PROCEEDINGS. XI BRAZILIAN SYMPOSIUM ON RIO DE JANEIRO, BRAZIL 30 SEPT.-3 OCT. 1998, LOS ALAMITOS, CA, USA,IEEE COMPUT. SOC, US, 30. September 1998 (1998-09-30), Seiten 175-178, XP010303779 ISBN: 0-8186-8704-5

## Beschreibung

Die vorliegende Erfindung betrifft eine Schaltungsanordnung zur Spannungsversorgung, einen Speicherbaustein mit der Schaltungsanordnung zur Spannungsversorgung, eine Verwendung der Schaltungsanordnung sowie ein Verfahren zum Betrieb einer Schaltungsanordnung zur Spannungsversorgung.

Schaltungsanordnungen zur Spannungsversorgung können zum Betreiben von Speicherbausteinen eingesetzt werden. Insbesondere sind derartige Schaltungsanordnungen für nichtflüchtige Halbleiterspeicher verwendbar. Um nichtflüchtige Speicherzellen zu programmieren und/oder zu löschen, kann eine hohe Spannung nötig sein. Eine Lebensdauer eines nichtflüchtigen Speichersteins kann von der Anstiegsrate der Programmier- und Löschspannung abhängen.

Das Dokument US 6,456,153 B2 beschreibt eine Anordnung zur Spannungsversorgung. Die Anordnung umfasst eine Ladungspumpe, der ein Rückkopplungsschaltkreis mit einem Spannungsteiler nachgeschaltet ist.

Das Dokument US 5,945,870 betrifft einen Schaltkreis zur Steuerung eines Spannungsanstiegs bei einem Hochspannungsgeneratorschaltkreis mit einer Ladungspumpe. Der Spannungsanstieg wird mittels einer Oszillatorfrequenz gesteuert, die der Ladungspumpe zugeleitet wird.

Das Dokument US 6,903,599 B2 befasst sich mit einem Verstärker zur Erzeugung eines Vergleichssignals, wobei der Verstärker mittels eines Oszillators mit einer negativen Ladungspumpe gekoppelt ist.

Das Dokument US 6,774,710 B2 beschreibt eine Ladungspumpenregelung. Die Ladungspumpe ist ausgangsseitig mit einem Eingang eines Komparators gekoppelt. Der Komparator wiederum ist über einen Oszillator und einen Taktgenerator mit mehreren Eingängen der Ladungspumpe verbunden.

In Dokument US 6,774,709 B2 wird ein Schaltkreis für die Regelung einer Ladungspumpe beschrieben. Der Schaltkreis weist einen Spannungsteiler zum Herunterteilen einer Ausgangsspannung der Ladungspumpe und einen Komparator auf. Eingangsseitig werden dem Komparator eine heruntergeteilte Ausgangsspannung, eine Referenzspannung und eine gefilterte, heruntergeteilte Ausgangsspannung zugeleitet.

In Dokument US 6,566,847 B1 ist ein Steuerungsschaltkreis für eine Ladungspumpe gezeigt, der einen Konstantstromgenerator umfasst. Der Strom des Konstantstromgenerators wird aufgeteilt zwischen einem stromkontrollierten Oszillator und einem weiteren Stromgenerator. Ein Anstieg einer Ausgangsspannung der Ladungspumpe führt zu einer Abnahme des Stroms, der dem stromkontrollierten Oszillator zugeleitet wird. Dies resultiert in einer Abnahme einer Taktfrequenz, die der Ladungspumpe zugeführt wird, und damit in einer Abnahme der Ausgangsspannung.

Das Dokument US 6,480,436 B2 befasst sich mit einem Halbleiterspeicher mit einer Matrix von Speicherzellen. Eine Ladungspumpe ist mit der Matrix der Speicherzellen verbunden.

In Dokument US 5,483,486 ist eine Ladungspumpe mit einem vorgeschalteten Steuerschaltkreis gezeigt. Eine Ausgangsspannung der Ladungspumpe wird über einen Teilerschaltkreis einem Eingang eines spannungskontrollierten Oszillators zugeleitet. Einem weiteren Eingang des spannungskontrollierten Oszillators wird eine Referenzspannung zugeführt. Ausgangsseitig ist der spannungskontrollierte Oszillator mit einem Steuereingang der Ladungspumpe verbunden.

Das Dokument US 5,168,174 beschreibt eine Ladungspumpe. Ein Rampenreferenzgenerator und ein Ausgang der Ladungspumpe sind mit zwei Eingängen eines Komparators gekoppelt. Ein Ausgang des Komparators ist mit der Ladungspumpe verbunden.

Das Dokument US 5,671,179 befasst sich mit einem Pulsgenerator für einen Speicher. Eine Spannungsreferenz und ein Ausgang einer Ladungspumpe sind mit zwei Eingängen eines Verstärkers verbunden. Ein Ausgang des Verstärkers ist über einen stromgesteuerten Oszillator mit einer Ladungspumpe gekoppelt.

Im Dokument "High-Voltage Management in Single-Supply CHE NOR-Type Flash Memories", I. Motta et al., Proceedings of the IEEE, Band 91, Nummer 4, April 2003, Seiten 554 bis 568, ist eine Spannungsversorgung für einen Speicher angegeben. In der Spannungsversorgung wird eine Referenzspannung von einem Referenzspannungsgenerator bereitgestellt, der auf dem Bandgap-Prinzip basiert.

Aufgabe der vorliegenden Erfindung ist es, eine Schaltungsanordnung zur Spannungsversorgung, einen Speicherbaustein mit der Schaltungsanordnung zur Spannungsversorgung und ein Verfahren zum Betrieb einer Schaltungsanordnung zur Spannungsversorgung derart bereitzustellen, dass eine Steilheit des Anstiegs einer Ausgangsspannung eingestellt ist.

Diese Aufgabe wird mit den Gegenständen der Patentansprüche 1 und 11 sowie dem Verfahren gemäß Patentanspruch 13 gelöst.
Weiterbildungen und Ausgestaltungen sind jeweils Gegenstand der abhängigen Ansprüche.

Erfindungsgemäß umfasst die Schaltungsanordnung eine Steuerungsanordnung, eine Ladungspumpe, einen Komparator und einen Rampensignalgenerator. Die Ladungspumpe weist einen ersten und einen zweiten Eingang sowie einen Ausgang auf. Der zweite Eingang der Ladungspumpe ist mit einem ersten Ausgang der Steuerungsanordnung gekoppelt. Der Komparator umfasst einen ersten und einen zweiten Eingang sowie einen Ausgang. Der erste Eingang des Komparators ist mit dem Ausgang der Ladungspumpe gekoppelt. Der Ausgang des Komparators ist mit einem ersten Eingang der Steuerungsanordnung verbunden. Der Rampensignalgenerator ist eingangsseitig mit einem zweiten Ausgang der Steuerungsanordnung und an einem Ausgang mit dem zweiten Eingang des Komparators verbunden.

Eine Versorgungsspannung ist dem ersten Eingang der Ladungspumpe zuführbar. Die Ladungspumpe ist dazu ausgelegt, an dem Ausgang eine Ausgangsspannung bereitzustellen. Die Ausgangsspannung beziehungsweise eine davon abgeleitete Spannung wird dem ersten Eingang des Komparators zugeführt. Der Komparator ist zur Abgabe eines Komparatorsignals an dem Ausgang des Komparators ausgelegt in Abhängigkeit von einem Vergleich der beiden Spannungen an dem ersten Eingang und an dem zweiten Eingang. Das Komparatorsignal wird über den Ausgang des Komparators dem ersten Eingang der Steuerungsanordnung zugeführt. Der Oszillator wird von der Steuerungsanordnung in Abhängigkeit von dem Komparatorsignal angesteuert. Der Rampensignalgenerator wird von der Steuerungsanordnung angesteuert und ist ausgelegt, eine Referenzausgangsspannung an dem Ausgang des Rampensignalgenerators abzugeben. Die Referenzausgangsspannung wird dem zweiten Eingang des Komparators zugeführt.

Mit Vorteil ist somit ein geschlossener Regelkreis gebildet, der die Steuerungsanordnung, die Ladungspumpe und den Komparator umfasst. Mit Vorteil wird mittels des Rampensignalgenerators und des nachgeschalteten Komparators eine Steilheit des Anstiegs der Ausgangsspannung eingestellt.

In einer Weiterbildung ist vorgesehen, dass der Rampensignalgenerator die Referenzausgangsspannung mit einem in Abhängigkeit von der Zeit ansteigenden Wert bereitstellt. Der Rampensignalgenerator kann dazu ausgelegt sein, die Referenzausgangsspannung mit einer bei null Volt beginnenden Rampe abzugeben.

In einer Ausführungsform kann der Rampensignalgenerator ein Tiefpassfilter aufweisen, dessen Ausgang den Ausgang des Rampensignalgenerators bildet. Mit Vorteil wird mittels des Tiefpassfilters ein schneller Anstieg der Referenzausgangsspannung vermieden.

In einer Ausführungsform ist das Tiefpassfilter als passiver Tiefpass, umfassend einen Widerstand und einen Kondensator, realisiert.

In einer bevorzugten Ausführungsform weist das Tiefpassfilter eine Switched-Capacitor-Schaltung auf. Die Switched-Capacitor-Schaltung kann eine einstellbare Tiefpasscharakteristik zeigen. Mit Vorteil ist das Tiefpassfilter als aktives Filter realisiert. Mit Vorteil ist ein Flächenbedarf für ein mittels einer Switched-Capacitor-Schaltung realisiertes Tiefpassfilter kleiner als eines passiven Tiefpasses, umfassend einen Widerstand und einen Kondensator. Mit Vorteil kann die Verwendung des Widerstandes, der üblicherweise hochohmig ist und einen hohen Flächenbedarf aufweist, vermieden werden.

Die Switched-Capacitor-Schaltung kann als Switched-Capacitor-Filter 2. Ordnung ausgebildet sein. Bevorzugt ist die Switched-Capacitor-Schaltung als Switched-Capacitor-Filter 1. Ordnung realisiert.

Der Rampensignalgenerator kann einen Ansteueroszillator umfassen, der ausgangsseitig mit dem Tiefpassfilter gekoppelt ist. Der Ansteueroszillator dient zum Bereitstellen eines Ansteuersignals, mit dem die Switched-Capacitor-Schaltung ansteuerbar ist.

In einer alternativen Ausführungsform umfasst der Rampensignalgenerator einen Integrator, der dem Ausgang des Rampensignalgenerators vorgeschaltet ist. Bevorzugt bildet ein Ausgang des Integrators den Ausgang des Rampensignalgenerators. Durch ein Integrieren eines Spannungs- oder Stromsignals ergibt sich ein Ansteigen der Referenzausgangsspannung.

In einer Weiterbildung weist der Rampensignalgenerator eine Bandgap-Schaltung auf. Eine Bandgap-Schaltung wird auch als Bandabstands-Referenz-Schaltung bezeichnet. In einer Ausführungsform ist die Bandgap-Schaltung an einem Ausgang mit einem Eingang des Tiefpassfilters verbunden. Die Bandgap-Schaltung kann dazu ausgelegt sein, eine Gleichspannung mit Rechteckform abzugeben, die mittels des Tiefpassfilters in eine rampenförmig ansteigende Referenzausgangsspannung transformiert wird. In einer alternativen Ausführungsform ist die Bandgap-Schaltung ausgangsseitig mit einem Eingang des Integrators verbunden. Die Bandgap-Schaltung kann dazu ausgelegt sein, einen konstanten Strom abzugeben, der mittels des Integrators in die ansteigende Referenzausgangsspannung transformiert wird.

In einer Weiterbildung umfasst die Schaltungsanordnung einen Oszillator zum Betrieb der Ladungspumpe. Der Oszillator ist vorgesehen, ausgangsseitig ein Oszillatorsignal bereitzustellen. In einer Ausführungsform ist ein Ausgang des Oszillators mit einem Eingang der Steuerungsanordnung verbunden. Gemäß dieser Ausführungsform ist die Steuerungsanordnung zur Weiterleitung des Oszillatorsignals an die Ladungspumpe in Abhängigkeit des Komparatorsignals vorgesehen. Mit Vorteil kann somit das Weiterleiten des Oszillatorsignals mittels der Steuerungsanordnung in Abhängigkeit von dem Komparatorsignal eingestellt werden.

In einer anderen Ausführungsform ist der Oszillator zwischen den ersten Ausgang der Steuerungsanordnung und die Ladungspumpe geschaltet. Der Oszillator kann somit unmittelbar an der Ladungspumpe angeschlossen sein. Mit Vorteil kann in dieser Ausführungsform der Oszillator mittels der Steueranordnung an- und ausgeschaltet werden. Somit lässt sich der Wirkungsgrad gegenüber einer Schaltungsanordnung mit ständig betriebenem Oszillator erhöhen.

Der Oszillator kann eine Ringoszillatorstruktur aufweisen, welche hintereinander geschaltete Inverterstufen umfasst. In einer Ausführungsform umfasst der Oszillator einen Schalter zur Deaktivierung des Oszillators. In einer Weiterbildung ist der Oszillator derart ausgelegt, dass er in einem deaktivierten Zustand keinen Energieverbrauch hat.

In einer Weiterbildung ist der Oszillator zum Bereitstellen des Oszillatorsignals in Abhängigkeit von der Temperatur vorgesehen. Dabei kann die Oszillatorfrequenz bei steigender Temperatur ebenfalls steigen. Somit kann mit Vorteil der höhere Energieverbrauch eines CMOS-Schaltkreises bei einer höheren Temperatur mittels der steigenden Oszillatorfrequenz ausgeglichen werden.

Die Oszillatorfrequenz kann mittels eines Steuerstroms einstellbar sein. Aufgrund einer einstellbaren Temperaturabhängigkeit des Steuerstroms weist ebenso die Oszillatorfrequenz eine Temperaturabhängigkeit auf.

An der Bandgap-Schaltung können ausgangsseitig temperaturabhängige und näherungsweise nicht temperaturabhängige Signale abgreifbar sein. Eines der näherungsweise temperaturunabhängigen Signale kann ein Strom oder alternativ eine Spannung sein. Die Bandgap-Schaltung kann ausgangsseitig mit einem Eingang des Oszillators zur Zuführung des temperaturabhängigen Signals verbunden sein. Mit Vorteil weist das Oszillatorsignal somit bei einer höheren Temperatur eine höhere Oszillatorfrequenz auf.

In einer Weiterbildung weist die Schaltungsanordnung eine Bypass-Schaltung auf, die an einem Eingang mit dem ersten Eingang der Ladungspumpe und an einen Ausgang mit dem Ausgang der Ladungspumpe verbunden ist. Der Bypass-Schaltung kann eingangsseitig die Versorgungsspannung zugeführt werden. Die Bypass-Schaltung ist zu dem Bereitstellen der Eingangsspannung als Ausgangsspannung der Schaltungsanordnung ausgelegt. Mit Vorteil kann somit die Ladungspumpe überbrückt sein und die Versorgungsspannung als Ausgangsspannung der Schaltungsanordnung bereitgestellt werden. Dies kann zur Versorgung einer an die Ausgangsspannung der Schaltungsanordnung ankoppelbaren elektrischen Last mit der Versorgungsspannung verwendet werden.

Die Bypass-Schaltung kann einen Schalter umfassen, der den Eingang mit dem Ausgang der Bypass-Schaltung verbindet. Die Steuerungsanordnung kann ausgangsseitig mit einem Steuereingang der Bypass-Schaltung und damit mit einem Steuereingang des Schalters verbunden sein. In einer Ausführungsform umfasst der Schalter der Bypass-Schaltung einen Transistor. Mit Vorteil ist der Transistor als Metall-Oxid-Halbleiter-Feldeffekttransistor ausgebildet. In einer Ausführungsform kann vorgesehen sein, dass während eines Bypass-Betriebs der Oszillator ausgeschaltet ist.

Die Ladungspumpe kann eine Serienschaltung, umfassend eine Spule und einen Schalter, aufweisen, an der die Versorgungsspannung anlegbar ist. Weiter kann die Ladungspumpe eine Diode aufweisen, die einen Abgriff zwischen der Spule und dem Schalter mit dem Ausgang der Ladungspumpe koppelt. Ein Steuereingang des Schalters kann mit dem Oszillator zur Zuführung des Oszillatorsignals an den Schalter verbunden sein. Ist der Schalter geschlossen, so steigt der Strom durch die Induktivität an. Nach dem Öffnen des Schalters tritt eine Überspannung auf, die über die Diode dem Ausgang der Ladungspumpe zugeleitet wird.

In einer alternativen Ausführungsform umfasst die Ladungspumpe einen Transformator zum Transformieren der Versorgungsspannung.

In einer besonders bevorzugten Ausführungsform ist die Ladungspumpe als Dickson-Ladungspumpe ausgeführt und umfasst Dioden und Kondensatoren, welche taktweise umgeschaltet werden. Die Ladungspumpe kann mehrere Taktphasen aufweisen und damit effizienter sein. Die Ladungspumpe kann als Abwärtswandler oder bevorzugt als Aufwärtswandler ausgeführt sein. Es ist ein Vorteil dieser Ausführungsform, dass keine Spule und kein Transformator zur Spannungskonversion benötigt werden.

Die Schaltungsanordnung kann in einer Ausführungsform auf einem Halbleiterkörper realisiert sein.

Gemäß einem Aspekt des vorgeschlagenen Prinzips umfasst ein Speicherbaustein eine Schaltungsanordnung zur Spannungsversorgung wie oben beschrieben sowie ein Array von Speicherzellen. Die Speicherzellen können als nichtflüchtige Speicherzellen ausgebildet sein.

Der Speicherbaustein kann in einer Ausführungsform auf einem Halbleiterkörper realisiert sein.

Die Schaltungsanordnung kann für die Spannungsversorgung eines nichtflüchtigen Speicherbausteins verwendet werden. Die Schaltungsanordnung kann zur Versorgung eines Electrically Erasable Programmable Read-Only Memory, abgekürzt EEPROM, eingesetzt sein. Bei einem EEPROM kann in einem Lesemodus die Ladungspumpe deaktiviert und mittels der Bypass-Schaltung überbrückt sein. In einem Schreibmodus des EEPROMs kann die Ladungspumpe aktiviert sein und die Ausgangsspannung einen höheren Wert als die Versorgungsspannung aufweisen.

Erfindungsgemäß sieht ein Verfahren zum Betrieb der Schaltungsanordnung zur Spannungsversorgung folgende Schritte vor: Eine Referenzausgangsspannung nimmt von beispielsweise null Volt an ansteigende Werte an. Die Referenzausgangsspannung und eine aus einer Ausgangsspannung einer Ladungspumpe erzeugte heruntergeteilte Spannung werden verglichen. Die Ladungspumpe wird aktiviert, falls der Betrag der heruntergeteilten Spannung kleiner als der Betrag der Referenzausgangsspannung ist. Falls der Betrag der heruntergeteilten Spannung größer als oder gleich dem Betrag der Referenzspannung ist, wird die Ladungspumpe deaktiviert.

Mit Vorteil wird somit mittels der langsam ansteigenden Referenzausgangsspannung die Ladungspumpe deaktiviert, falls die Ausgangsspannung der Ladungspumpe einen schnelleren Anstieg erfährt, als eingestellt ist.

In einer Ausführungsform wird die Referenzausgangsspannung in Form einer Rampenfunktion hochgefahren. Dabei kann die Referenzausgangsspannung durch eine Tiefpass-Filterung einer Referenzspannung mittels einer Switched-Capacitor-Schaltung generiert werden.

In einer bevorzugten Ausführungsform durchfährt die Referenzausgangsspannung nach einem Ausfall einer Versorgungsspannung die Rampe nicht von neuem. Gemäß der bevorzugten Ausführungsform wird die Rampe nur einmal beim Einschalten durchlaufen. Die Referenzausgangsspannung sinkt bevorzugt bei einem Ausfall der Versorgungsspannung nicht ab. Die Referenzausgangsspannung bleibt bevorzugt bei einem Ausfall der Versorgungsspannung auf einem konstanten Wert.

Zusammenfassend hat das erfindungsgemäße Prinzip folgende Vorteile:
- Ein Anstieg einer Ausgangsspannung einer Ladepumpe ist verlangsamt.
- Mittels eines Rampensignalgenerators ist das Anstiegsverhalten der Ausgangsspannung einstellbar.

Die Erfindung wird nachfolgend an mehreren Ausführungsbeispielen anhand der Figuren näher erläutert. Funktions- beziehungsweise wirkungsgleiche Bauelemente tragen gleiche Bezugszeichen. Insoweit sich Schaltungsteile oder Bauelemente in ihrer Funktion entsprechen, wird deren Beschreibung nicht in jeder der folgenden Figuren wiederholt.
- Figuren 1A und 1B: zeigen jeweils beispielhafte Schaltungsanordnungen zur Spannungsversorgung.
- Figur 2: zeigt eine beispielhafte Schaltungsanordnung zur Spannungsversorgung mit SwitchedCapacitor-Schaltung nach dem vorgeschlagenen Prinzip.
- Figur 3: zeigt beispielhafte Signalverläufe einer Referenzspannung, eines ersten Stromes und einer Oszillatorfrequenz in Abhängigkeit der Temperatur.
- Figur 4: zeigt ein beispielhaftes Tiefpassfilter mit Switched-Capacitor-Schaltung.
- Figur 5: zeigt einen beispielhaften Integrator.
- Figur 6: zeigt einen beispielhaften Spannungsteiler.
- Figur 7: zeigt eine beispielhafte Bypass-Schaltung.
- Figur 8: zeigt beispielhafte Signalverläufe eines Oszillatorsignals, einer heruntergeteilten Spannung, einer Referenzspannung, einer Referenzausgangsspannung und einer Ausgangsspannung in Abhängigkeit von der Zeit.
- Figur 9: zeigt eine beispielhafte Speicheranordnung mit der Schaltungsanordnung zur Spannungsversorgung nach dem vorgeschlagenen Prinzip.

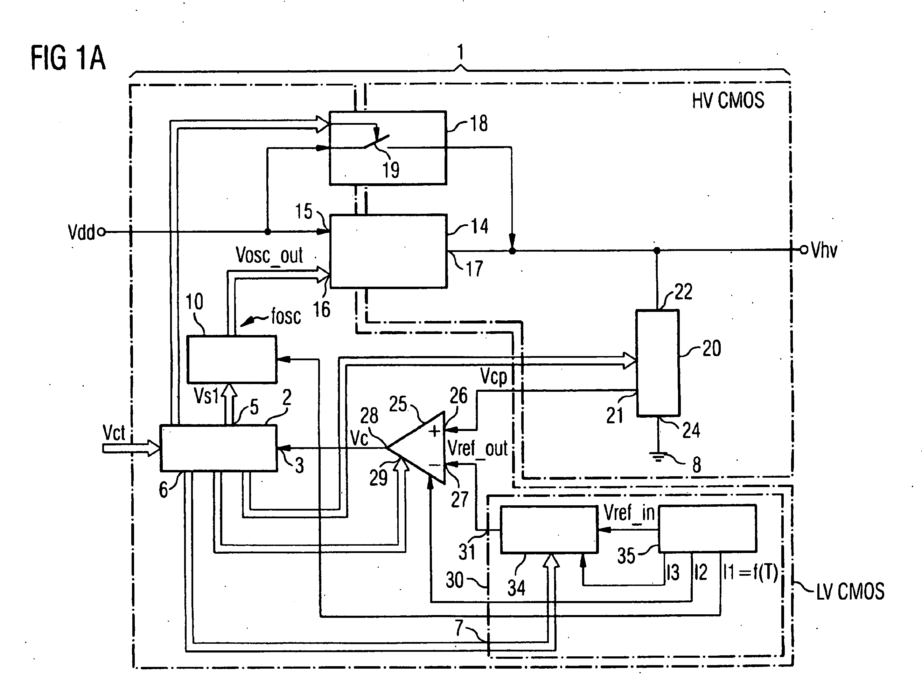

Figur 1A zeigt eine beispielhafte Ausführungsform einer Schaltungsanordnung 1 zur Spannungsversorgung, welche eine Ladungspumpe 14 mit nachgeschaltetem Spannungsteiler 20, einen Komparator 25, eine Steuerungsanordnung 2 und einen Oszillator 10 umfasst. Weiter weist die Schaltungsanordnung 1 eine Bypass-Schaltung 18 sowie einen Rampensignalgenerator 30 auf.

Die Steuerungsanordnung 2 ist an einem ersten Ausgang 5 mit dem Oszillator 10 verbunden. Der Oszillator 10 ist ausgangsseitig an einem zweiten Eingang 16 der Ladungspumpe 14 angeschlossen. Der Spannungsteiler 20 ist zwischen einen Ausgang 17 der Ladungspumpe 14 und einen Bezugspotenzialanschluss 8 geschaltet. Ein Abgriffsknoten 21 des Spannungsteilers 20 ist mit einem nichtinvertierenden Eingang 26 des Komparators 25 verbunden. Ein Ausgang 31 des Rampensignalgenerators 30 ist an einen invertierenden Eingang 27 des Komparators 25 angeschlossen. Ein Ausgang 28 des Komparators 25 ist mit einem ersten Eingang 3 der Steuerungsanordnung 2 verbunden. Die Steuerungsanordnung 2 ist ausgangsseitig mit einem Steuereingang 29 des Komparators 25 gekoppelt. Ebenso ist die Steueranordnung 2 ausgangsseitig mit einem Steuereingang des Spannungsteilers 20 gekoppelt.

Weiter ist die Steueranordnung 2 ausgangsseitig mit einem Steuereingang der Bypass-Schaltung 18 verbunden, welche einen Schalter 19 aufweist. Ein Steueranschluss des Schalters 19 ist mit dem Steuereingang der Bypass-Schaltung 18 gekoppelt. Die Bypass-Schaltung 18 ist eingangsseitig mit einem ersten Eingang 15 der Ladungspumpe 14 und ausgangsseitig mit dem Ausgang 17 der Ladungspumpe 14 verbunden.

Die Rampengeneratorschaltung 30 weist eine Bandgap-Schaltung 35 und einen, der Bandgap-Schaltung 35 nachgeschalteten Integrator 34 auf. Ein Ausgang des Integrators 34 ist über einen Ausgang 31 mit dem invertierenden Eingang 27 des Komparators 25 verbunden. Die Steuerungsanordnung 2 ist an einem zweiten Ausgang 6 über den Eingang 7 der Rampengeneratorschaltung 30 mit einem Steuereingang des Integrators 34 gekoppelt. Die Bandgap-Schaltung 35 ist ausgangsseitig mit dem Oszillator 10 zur Zuführung eines ersten Stroms I1, mit dem Komparator 25 zur Zuführung eines zweitens Stroms I2 und mit dem Integrator 34 zur Zuführung einer Referenzspannung Vref_in und eines dritten Stroms I3 verbunden.

Der Schaltungsanordnung 1 wird eine Versorgungsspannung Vdd zugeführt, die innerhalb der Schaltungsanordnung 1 dem ersten Eingang 15 der Ladungspumpe und dem Eingang der Bypass-Schaltung 18 zugeleitet wird. An einem Ausgang der Schaltungsanordnung wird eine Ausgangsspannung Vhv bereitgestellt, die in einem Betriebszustand von der Ladungspumpe 14 an dem Ausgang 17 abgeben wird. In einem Bypass-Betrieb wird mittels der Bypass-Schaltung 18 die Versorgungsspannung Vdd als Ausgangspannung Vhv bereitgestellt.

Der Spannungsteiler 20 ist ausgelegt zum Herunterteilen der Ausgangsspannung Vhv und zum Bereitstellen einer heruntergeteilten Spannung Vcp. Die heruntergeteilte Spannung Vcp wird dem nichtinvertierenden Eingang 26 des Komparators 25 zugeführt. An der Bandgap-Schaltung 35 sind ausgangsseitig der erste, der zweite und der dritte Strom I1, I2, I3 sowie die Referenzspannung Vref_in abgreifbar. Dem Integrator 34 wird der dritte Strom I3 zugeleitet. Der Integrator 34 stellt ausgangsseitig eine Referenzausgangsspannung Vref_out bereit, die durch Integration des dritten Stroms I3 erzeugt wird. Der erste Strom I1 wird von der Bandgap-Schaltung 35 dem Oszillator 10 bereitgestellt. Der erste Strom I1 ist temperaturabhängig, sodass der Oszillator 10 zu einer temperaturabhängigen Bereitstellung des Oszillatorsignals Vosc_out auslegbar ist. Der zweite Strom I2 wird von der Bandgap-Schaltung 35 dem Komparator 25 bereitgestellt. Die Referenzspannung Vref_in wird von der Bandgap-Schaltung 35 dem Integrator 34 zugeleitet.

Der Komparator 25 stellt in Abhängigkeit eines Vergleichs der heruntergeteilten Spannung Vcp und der Referenzausgangsspannung Vref_out ein Komparatorsignal Vc bereit, das an dem Ausgang 28 des Komparators 25 abgreifbar ist und dem ersten Eingang 3 der Steuerungsanordnung 2 zugeleitet wird. In Abhängigkeit von dem Komparatorsignal Vc und einem der Steuerungsanordnung 2 zugeleiteten externen Steuersignal Vct bildet die Steueranordnung 2 ein erstes Steuersignal Vs1, das dem Oszillator 10 zugeleitet wird. In Abhängigkeit von dem ersten Steuersignal Vs1 stellt der Oszillator 10 ausgangsseitig ein Oszillatorsignal Vosc_out mit einer Oszillatorfrequenz fosc bereit. Entsprechend den Pulsen im Oszillatorsignal Vosc_out wird von der Ladungspumpe 14 die Ausgangsspannung Vhv bereitgestellt.

Die Schaltungsanordnung 1 kann in einen Hochspannungs-CMOS-Teil HV CMOS und einen Niederspannungs-CMOS-Teil LV CMOS eingeteilt werden. Der Hochspannungs-CMOS-Teil HV CMOS umfasst den Spannungsteiler 20 sowie Teile der Ladungspumpe 14 und der Bypass-Schaltung 18. Der Niederspannungs-CMOS-Teil LV CMOS umfasst die Steueranordnung 2, den Oszillator 10, den Rampensignalgenerator 30, den Komparator 25, Teile der Ladungspumpe 14 und Teile der Bypass-Schaltung 18.

Mit Vorteil wird somit mittels des Rampensignalgenerators 30 eine steigende Referenzausgangsspannung Vref_out abgegeben, die es ermöglicht, dass die Ladungspumpe 14 die Ausgangsspannung Vhv mit einem einstellbaren Anstieg bereitstellt. Aufgrund der Temperaturabhängigkeit des ersten Stroms I1 weist die Oszillatorfrequenz fosc bei einer höheren Temperatur einen höheren Wert auf. Mit Vorteil kann mittels der Bypass-Schaltung 18 die Ladungspumpe 14 überbrückt werden, sodass in dem Bypass-Betrieb an dem Ausgang der Schaltungsanordnung 1 die Versorgungsspannung Vdd anliegt.

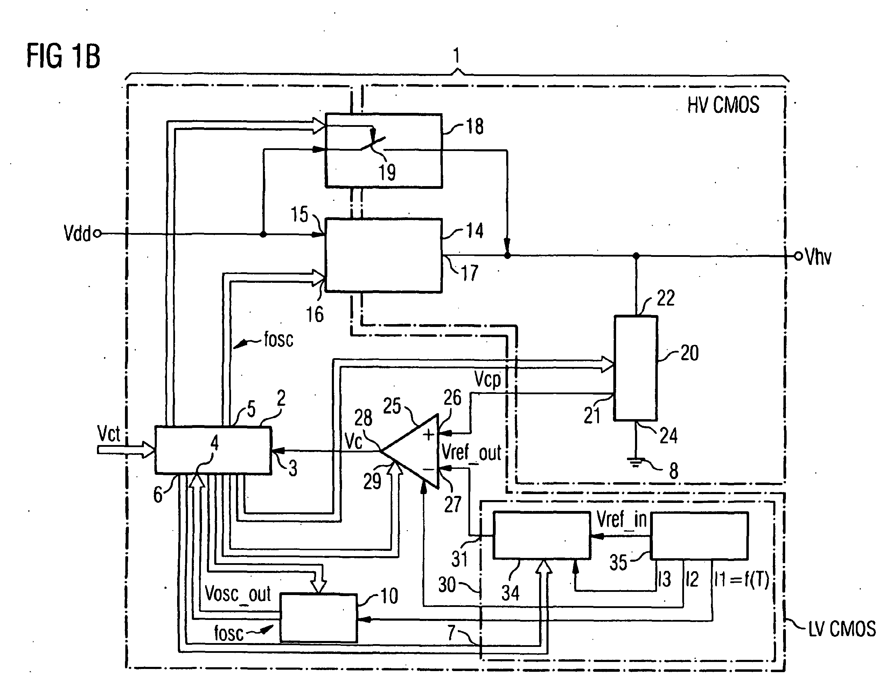

Figur 1B zeigt eine alternative, beispielhafte Schaltungsanordnung zur Spannungsversorgung. Im Unterschied zur Schaltungsanordnung gemäß Figur 1A ist in der Schaltungsanordnung 1 gemäß Figur 1B die Steuerungsanordnung 2 mit der Ladungspumpe 14 verbunden. Dazu ist der erste Ausgang 5 der Steuerungsanordnung 2 an dem zweiten Eingang 16 der Ladungspumpe 14 angeschlossen. Der Oszillator 10 ist ausgangsseitig mit einem zweiten Eingang 4 der Steuerungsanordnung 2. Der Oszillator 10 kann eingangsseitig mit einem weiteren Ausgang der Steueranordnung verbunden sein.

Das von dem Oszillator 10 abgegebene Oszillatorsignal Vosc_out wird dem zweiten Eingang 4 der Steuerungsanordnung 2 zugeleitet. In Abhängigkeit von dem Komparatorsignal Vc und dem externen Steuersignal Vct leitet die Steuerungsanordnung 2 das Oszillatorsignal Vosc_out an die Ladungspumpe 14 weiter. Gemäß der Schaltungsanordnung in Figur 1B kann somit der Oszillator 10 für die Dauer des Betriebs der Schaltungsanordnung im Betrieb sein und wird zur Deaktivierung der Ladungspumpe 14 nicht ausgeschaltet.

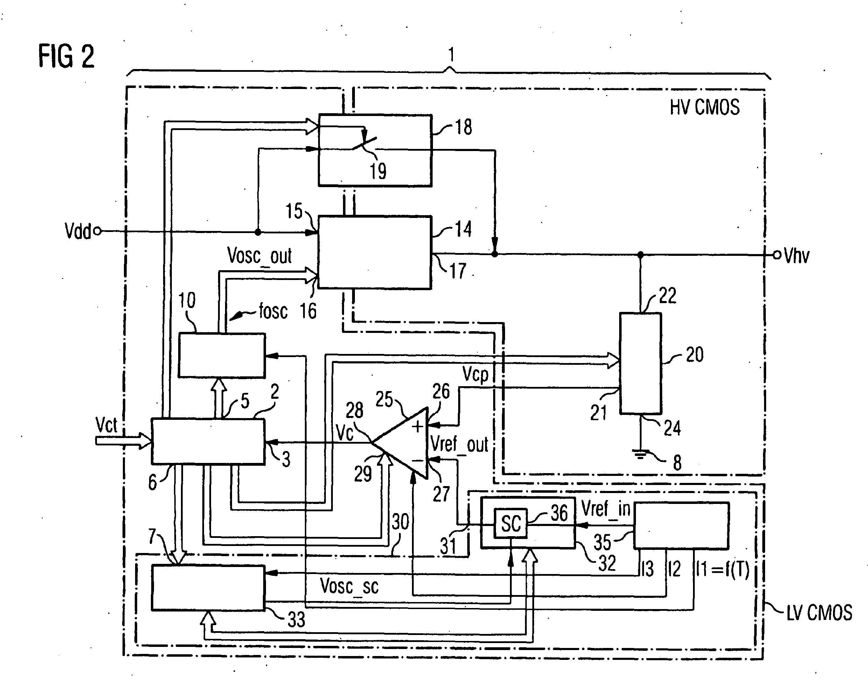

Figur 2 zeigt eine beispielhafte Ausführungsform einer Schaltungsanordnung zur Spannungsversorgung nach dem vorgeschlagenen Prinzip, in der der Rampensignalgenerator 30 einen Ansteuerungsoszillator 33, ein Tiefpassfilter 32 und die Bandgap-Schaltung 35 aufweist.

Die Steuerungsanordnung 2 ist an dem Ausgang 6 mit dem Eingang 7 des Rampensignalgenerators 30 verbunden. An dem Eingang 7 des Rampensignalgenerators 30 ist der Ansteuerungsoszillator 33 angeschlossen. Die Ansteuerungsoszillator 33 ist ausgangsseitig mit dem Tiefpassfilter 32 verbunden. Die Bandgap-Schaltung 35 ist ausgangsseitig mit einem weiteren Eingang des Tiefpassfilters 32 verbunden. Ausgangsseitig ist das Tiefpassfilter 32 über den Ausgang 31 des Rampensignalgenerators 30 an den invertierenden Eingang 27 des Komparators 25 angeschlossen. Das Tiefpassfilter 32 umfasst eine Switched-Capacitor-Schaltung 36, die eingangsseitig mit dem Ansteuerungsoszillator 33 und der Bandgap-Schaltung 35 und ausgangsseitig mit dem Ausgang 31 des Rampensignalgenerators 30 gekoppelt ist. Die Bandgap-Schaltung 35 ist mit dem Ansteuerungsoszillator 33 verbunden.

In Abhängigkeit von einem Signal der Steuerungsanordnung 2 stellt der Ansteuerungsoszillator 33 ein Ansteuersignal Vosc_sc bereit, das dem Tiefpassfilter 32 zugeleitet wird. Die Referenzspannung Vref_in weist einen näherungsweise rechteckförmigen Verlauf auf. Da die Switched-Capacitor-Schaltung 36 zur Filterung mit einer Tiefpasscharakteristik ausgelegt ist, dient das Tiefpassfilter 32 somit zur Filterung der Referenzspannung Vref_in und gibt ausgangsseitig die Referenzausgangsspannung Vref_out mit einem einstellbaren Anstieg ab. Das Ansteuersignal Vosc_sc dient zum Bereitstellen der Taktsignale für die Switched-Capacitor-Schaltung 36.

Mit Vorteil kann mittels des Ansteuerungsoszillators 33 die Tiefpasscharakteristik der Switched-Capacitor-Schaltung 36 und somit der Anstieg der Ausgangsspannung Vhv eingestellt werden.

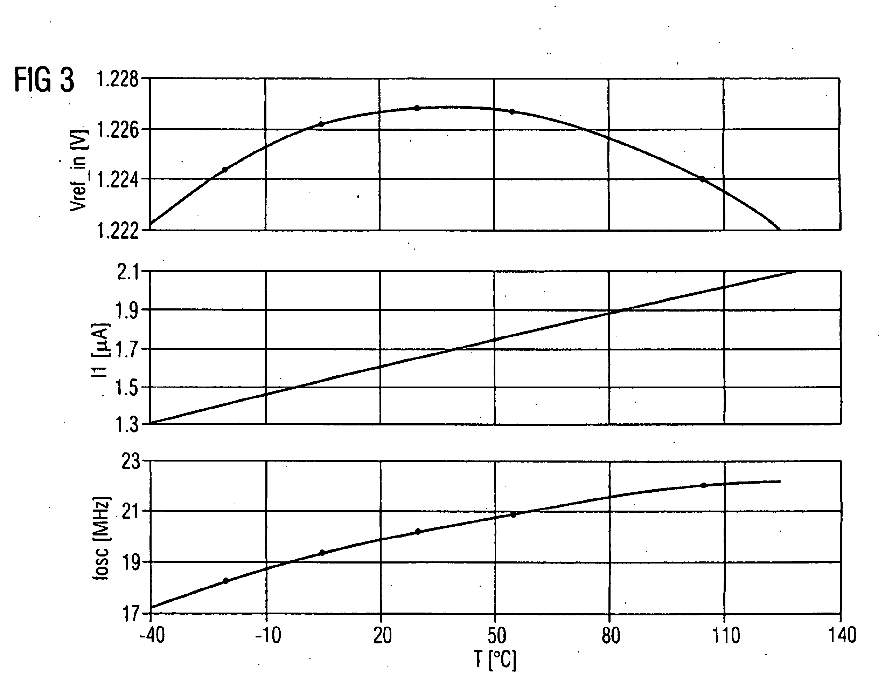

Figur 3 zeigt die Referenzspannung Vref_in, den ersten Strom I1 und die Oszillatorfrequenz fosc in Abhängigkeit von der Temperatur T, wie sie in den Schaltungsanordnungen gemäß den Figuren 1A, 1B und 2 auftreten können.

Die Temperatur T ist die Temperatur eines Halbleiterkörpers, welcher die Schaltungsanordnung 1 zur Spannungsversorgung umfasst. Da die Temperatur T mittels der Bandgap-Schaltung 35 ermittelt wird, entspricht sie der Temperatur des Halbleiterkörpers am Ort der Bandgap-Schaltung 35. Die Temperatur hängt vom Leistungsverbrauch der Bauelemente auf dem Halbleiterkörper und von der Umgebungstemperatur ab.

Die Referenzausgangsspannung Vref_out weist eine geringe Temperaturabhängigkeit auf, die in einem Ausführungsbeispiel kleiner als 100 ppm beträgt.

Der erste Strom I1 sowie die Oszillatorfrequenz Vosc des Oszillators 10 zeigen einen Anstieg mit steigender Temperatur. Mit Vorteil gibt somit der Oszillator 10 eine höhere Oszillatorfrequenz fosc ab, wenn aufgrund der höheren Temperatur T des Halbleiterkörpers eine an die Schaltungsanordnung 1 ankoppelbare elektrische Last eine höhere Leistung benötigt. Eine derartige Last kann ein nichtflüchtiger Speicherbaustein sein.

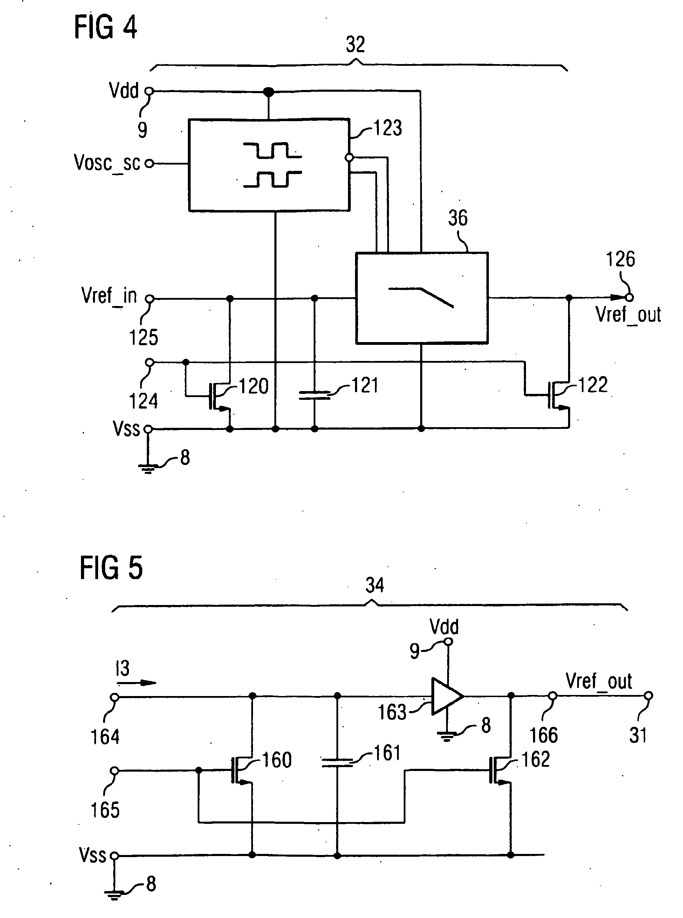

Figur 4 zeigt eine beispielhafte Ausführungsform eines Tiefpassfilters 32 mit einer Switched-Capacitor-Schaltung 36, wie er in einen Rampensignalgenerator 30 entsprechend der Schaltungsanordnung 1 in Figur 2 eingesetzt werden kann.

Das Tiefpassfilter 32 umfasst die Switched-Capacitor-Schaltung 36, einen Taktgenerator 123, zwei Transistoren 120, 122 und einen Kondensator 121. Der Taktgenerator 123 ist eingangsseitig mit dem Ansteuerungsoszillator 33 verbunden. Der Taktgenerator 123 ist ausgangsseitig über zwei Leitungen mit der Switched-Capacitor-Schaltung 36 verbunden. Ein Steuereingang 124 des Tiefpassfilters 32 ist mit einem Steueranschluss des Transistors 120 und mit einem Steueranschluss des Transistors 122 verbunden. Ein Eingang 125, der mit der Bandgap-Schaltung 35 verbunden ist und an dem die Referenzspannung Vref_in dem Tiefpassfilter 32 zugeführt wird, ist mit einem Eingang der Switched-Capacitor-Schaltung 36 sowie mit einem ersten Anschluss des Transistors 120 und einer ersten Elektrode des Kondensators 121 verbunden. An einem Ausgang der Switched-Capacitor-Schaltung 36 ist ein erster Anschluss des Transistors 122 angeschlossen. Der Ausgang der Switched-Capacitor-Schaltung 36 ist mit dem Ausgang 31 des Rampensignalgenerators 30 verbunden. Ein zweiter Anschluss des Transistors 120, eine zweite Elektrode des Kondensators 121 sowie ein zweiter Anschluss des Transistors 122 sind mit dem Bezugspotenzialanschlüss 8 verbunden. Der Taktgenerator 123 und die Switched-Capacitor-Schaltung 36 sind zwischen einen Versorgungsanschluss 9, an dem die Versorgungsspannung Vdd dem Tiefpassfilter 32 zuführbar ist, und den Bezugspotenzialanschluss 8 geschaltet.

Der Taktgenerator 123 stellt in Abhängigkeit von dem Ansteuersignal Vosc_sc, welches ihm eingangsseitig bereitgestellt wird, mittels der beiden Leitungen die Schalterstellungen in der Switched-Capacitor-Schaltung 36 ein. Die Switched-Capacitor-Schaltung 36 ist zur Tiefpassfilterung der Referenzspannung Vref_in und zum Bereitstellen der Referenzausgangsspannung Vref_out als gefiltertes Signal vorgesehen. Die Referenzspannung Vref_in kann in einer Ausführungsform näherungsweise eine Rechteckfunktion aufweisen. Mittels des Kondensators 121 wird die Referenzspannung Vref_in geglättet. Der Kondensator 121 dient als Stützkondensator und ist zur Unterdrückung von Störimpulsen von der Switched-Capacitor-Schaltung 36 auf die Bandgap-Schaltung 35 vorgesehen. An einem Ausgang 126 der Switched-Capacitor-Schaltung 36 und damit des Tiefpassfilters 32 ist die Referenzausgangsspannung Vref_out abgreifbar.

Die beiden Transistors 120, 122 sind vorgesehen, den Kondensator 121 und eingangsseitig sowie ausgangsseitig in der Switched-Capacitor-Schaltung 36 vorhandene Kondensatoren kurzzuschließen, sodass in Abhängigkeit eines Signals an dem Steuereingang 124 die Referenzausgangsspannung vref_out auf null Volt gesetzt werden kann. Nach einem derartigen Entladevorgang wird bei einer vorhandenen Referenzspannung Vref_in mittels der Switched-Capacitor-Schaltung 36 eine einstellbar ansteigende Referenzausgangsspannung Vref_out von dem Tiefpassfilter 32 und damit von dem Rampensignalgenerator 30 abgegeben.

Mit Vorteil ist der Anstieg der Referenzausgangsspannung Vref_out mittels des Ansteuersignals Vosc_Sc einstellbar. Mit Vorteil ist mittels einer Frequenz des Ansteuersignals Vosc_Sc die Tiefpasscharakteristik der Switched-Capacitor-Schaltung 36 einstellbar. Somit kann mit Vorteil auch der Anstieg der Ausgangsspannung Vhv eingestellt werden.

In einer Ausführungsform umfasst die Switched-Capacitor-Schaltung 36 einen nicht eingezeichneten Kondensator, der in Abhängigkeit von dem Ansteuersignal Vosc_Sc aufgeladen und entladen wird. Eine Grenzfrequenz des Tiefpassfilters 32 kann eine Funktion eines Kapazitätswertes des Kondensators und der Frequenz des Ansteuersignals Vosc_Sc sein. Mit Vorteil kann der Kapazitätswert und damit eine Fläche des Kondensators klein gehalten werden, da die Tiefpasscharakteristik der Switched-Capacitor-Schaltung 36 nicht nur eine Funktion des Kapazitätswertes des Kondensators, sondern auch der Frequenz des Ansteuersignals Vosc_Sc ist. Die Frequenz des Ansteuersignals Vosc_Sc kann einstellbar sein.

Figur 5 zeigt eine beispielhafte Ausführungsform eines Integrators 34, wie er in einer Schaltungsanordnung 1 gemäß Figur 1A und Figur 1B eingesetzt werden kann.

Der Integrator 34 umfasst zwei Transistoren 160, 162, einen Kondensator 161 und einen Puffer 163. An einem Eingang 164 des Integrators 34 ist ein erster Anschluss des Transistors 160, eine erste Elektrode des Kondensators 161 und der Puffer 163 eingangsseitig angeschlossen. Der Puffer 163 ist ausgangsseitig mit einem ersten Anschluss des Transistors 162 und einem Ausgang 166 des Integrators 34, welcher mit dem Ausgang 31 des Rampensignalgenerators verbunden ist, verbunden. Ein zweiter Anschluss des Transistors 160, eine zweite Elektrode des Kondensators 161 und ein zweiter Anschluss des Transistors 162 sind an dem Bezugspotenzialanschluss 8 angeschlossen. Der Puffer ist zwischen den Versorgungsanschluss 9 zur Zuführung der Versorgungsspannung Vdd und den Bezugspotenzialanschluss 8 geschaltet. Ein Steuereingang 165 des Integrators 34 ist mit einem Steueranschluss des Transistors 160 und einem Steueranschluss des Transistors 162 verbunden.

Am Eingang 164 wird dem Integrator 34 der dritte Strom I3 zugeführt, welcher den Kondensator 161 auflädt. Aufgrund des näherungsweise konstanten Wertes des dritten Stroms I3 steigt somit die Spannung über dem Kondensator 161 näherungsweise linear an. Mittels des Puffers 163 wird diese Spannung über dem Kondensator 161 als Referenzausgangsspannung Vref_out an dem Ausgang 166 des Integrators 34 und damit an dem Ausgang 31 des Rampensignalgenerators 30 abgegeben. Der Puffer 163 dient zum näherungsweise stromlosen Abgreifen der Spannung über dem Kondensator 161. Mittels der beiden Transistoren 160, 162 kann der Kondensator 161 sowie Kondensatoren, die eingangs- oder ausgangsseitig in dem Puffer 163 vorhanden sind, entladen werden.

Mit Vorteil wird somit mit einem Signal an dem Steuereingang 165 die Referenzausgangsspannung vref_out auf null Volt zurückgesetzt werden. Mit Vorteil erfolgt ein linearer Anstieg der Referenzausgangsspannung Vref_out bei einem konstanten dritten Strom I3.

Alternativ kann auch der Integrator 34 einen Operationsverstärker aufweisen, dessen Ausgang über einen Kondensator mit einem invertierenden Eingang gekoppelt ist.

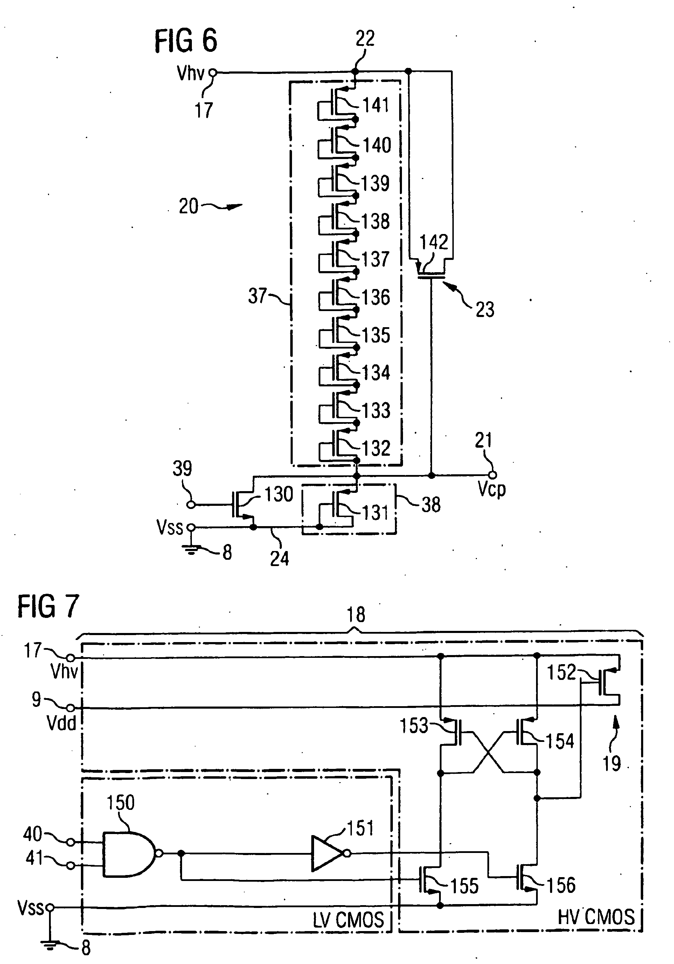

Figur 6 zeigt eine beispielhafte Ausführungsform eines Spannungsteilers 20, wie er in den Schaltungsanordnungen 1 gemäß den Figuren 1A, 1B und 2 einsetzbar ist.

Der Spannungsteiler 20 umfasst einen ersten Widerstand 37, der zwischen einen ersten Anschluss 22 und einen Abgriffsknoten 21 geschaltet ist, sowie einen zweiten Widerstand 38, der zwischen den Abgriffsknoten 21 und einen zweiten Anschluss 24 geschaltet ist. Der erste Widerstand 37 umfasst mehrere hintereinander geschaltete Widerstände. Die einzelnen Widerstände weisen jeweils einen als Widerstand geschalteten Transistor auf. Somit umfasst der erste Widerstand 37 zehn als Widerstände geschalteten Transistoren 132 bis 141. Der zweite Widerstand 38 weist ebenfalls einen als Widerstand geschalteten Transistor 131 auf. Die Transistoren 131 bis 141 zeigen näherungsweise die gleiche Strom-/Spannungscharakteristik und damit näherungsweise den gleichen Widerstandswert. Weiter weist der Spannungsteiler 20 einen Steuereingang 39 auf, der mit einem Steueranschluss eines Transistors 130 verbunden ist. Der Transistor 130 ist zwischen den Abgriffsknoten 21 und den Bezugspotenzialanschluss 8 geschaltet. Zusätzlich weist der Spannungsteiler 20 einen Transistor 142 auf, der als Kondensator zwischen den ersten Anschluss 22 und den Abgriffsknoten 21 geschaltet ist.

Der Transistor 130 ist als n-Kanal Metall-Oxid-Halbleiter Feldeffekttransistor und die Transistoren 131 bis 141 sind als Hochspannungs-p-Kanal Metall-Oxid-Halbleiter Feldeffekttransistoren ausgebildet. Der Transistor 142 ist als Hochspannungs-p-Kanal Metall-Oxid-Halbleiter Feldeffekttransistor ausgebildet.

Der erste Anschluss 22 ist mit dem Ausgang 17 der Ladungspumpe 14 zur Zuführung der Ausgangsspannung Vhv verbunden. Der Abgriffsknoten 21 dient zum Bereitstellen der heruntergeteilten Spannung Vcp, welche dem ersten Eingang 26 des Komparators 25 zugeleitet wird. Aufgrund der Anzahl der Transistoren in den Widerständen 37, 38 ist in dieser beispielhaften Ausführungsform des Spannungsteilers 20 die heruntergeteilte Spannung Vcp ein Elftel der Ausgangsspannung Vhv. Der Transistor 130 dient zum Absenken der heruntergeteilten Spannung Vcp auf null Volt. Der Transistor 142 bewirkt eine Wechselspannungskopplung zwischen dem Ausgang 17 der Ladungspumpe 14 und dem Abgriffsknoten 21. Der Transistor 142 dient dazu, bei einem sehr schnellen Anstieg der Ausgangsspannung Vhv die heruntergeteilte Spannung Vcp ebenfalls sehr schnell nach oben zu ziehen. Aufgrund der Kopplung steigt die heruntergeteilte Spannung Vcp schnell an und wird die Ladungspumpe ausgeschaltet, falls die heruntergeteilte Spannung Vcp größer als die Referenzausgangsspannung Vref_out ist.

Mit Vorteil weist der Spannungsteiler eine hohe Impedanz auf, um den von der Ladungspumpe bereitzustellenden Strom klein zu halten und um eine energieeffiziente Schaltungsanordnung 1 zu ermöglichen. Mit Vorteil kann mittels des Transistors 130 die heruntergeteilte Spannung Vcp auf null Volt gesetzt werden, um eindeutige Anfangsbedingungen zu setzen. Mit Vorteil wird mittels des Transistors 142 eine Totzeit der Regelung verringert und somit ein unerwünscht schneller Anstieg der Ausgangsspannung Vhv vermieden.

Figur 7 zeigt eine beispielhafte Ausführungsform einer Bypass-Schaltung 18, wie sie in den Schaltungsanordnungen 1 gemäß den Figuren 1A, 1B und 2 verwendbar ist.

Die Bypass-Schaltung 18 umfasst ein NAND-Gatter 150, einen Inverter 151, einen Schalter 19 sowie vier Transistoren 153 bits 156. Der Schalter 19 weist einen Transistor 152 auf, der zwischen den Ausgang 17 der Ladungspumpe 14 und den Versorgungsanschluss 9 geschaltet ist. Zwischen den Ausgang 17 der Ladungspumpe 14 und den Bezugspotenzialanschluss 8 ist eine Serienschaltung, umfassend die Transistoren 153 und 155 geschaltet. Eine zweite Serienschaltung, umfassend die Transistoren 154, 156, ist ebenfalls zwischen den Ausgang 17 und den Bezugspotenzialanschluss 8 geschaltet. Ein Steueranschluss des Transistors 153 ist mit einem Abgriff zwischen den Transistoren 154 und 156 sowie mit einem Steueranschluss des Transistors 152 verbunden. Ein Steueranschluss des Transistors 154 ist mit einem Abgriff zwischen den beiden Transistoren 153, 155 verbunden.

Zwei Steuereingänge 40, 41 sind an den beiden Eingängen des NAND-Gatters 150 angeschlossen. Ein Ausgang des NAND-Gatters 150 ist mit einem Steueranschluss des Transistors 155 sowie über den Inverter 151 mit einem Steueranschluss des Transistors 156 verbunden. Der Transistor 152 ist als Hochspannungs-p-Kanal Metall-Oxid-Halbleiter Feldeffekttransistor ausgebildet. Die Transistoren 153 bis 156 sind ebenfalls als Hochspannungs-Metall-Oxid-Halbleiter Feldeffekttransistoren ausgebildet, wobei die beiden Transistoren 153, 154 p-Kanal Feldeffekttransistoren und beiden Transistoren 155, 156 n-Kanal Feldeffekttransistoren sind.

Der Schalter 19 und damit der Transistor 152 dient zum Zuleiten der an dem Versorgungsanschluss 9 anliegenden Versorgungsspannung Vdd an den Ausgang 17 der Ladungspumpe 14. Ein Steuersignal für den Transistor 152 wird mittels der vier Transistoren 153 bis 156 gebildet.

Mit Vorteil wird somit der Schalter 19, dessen Anschlüsse auf einem hohen Potential liegen können, mittels der vier Transistoren 153 bis 156 je nach den Signalen an den Steuereingängen 40, 41 in einen leitenden und in einen nicht-leitenden Betriebszustand geschaltet.

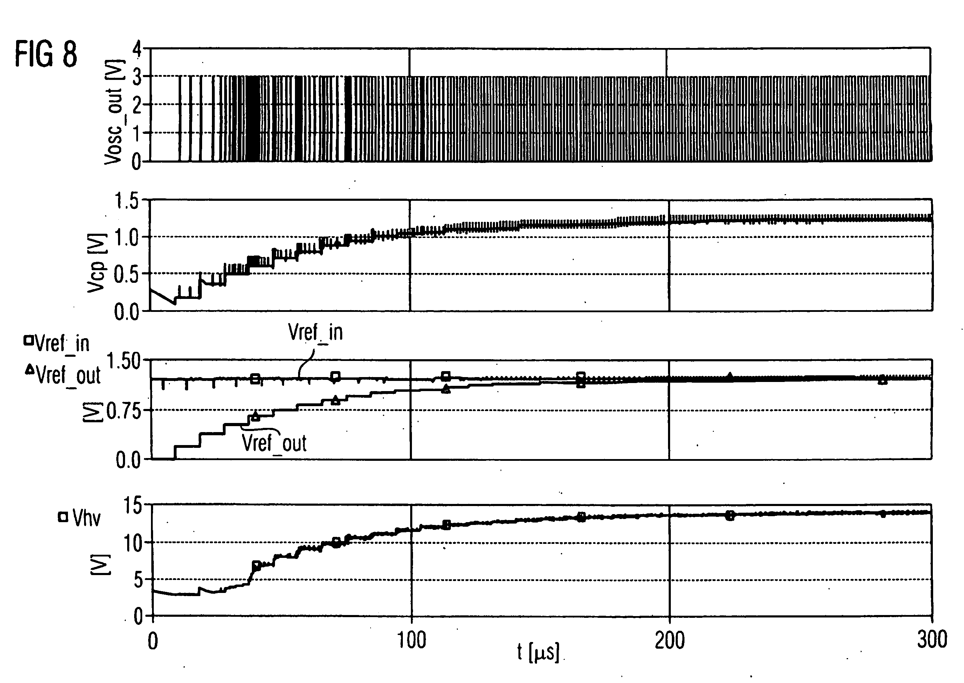

Figur 8 zeigt einen beispielhaften Signalverlauf des Oszillatorsignals Vosc_out, der heruntergeteilten Spannung Vcp, der Referenzausgangsspannung Vref_out, der Referenzspannung Vref_in sowie der Ausgangsspannung Vhv in Abhängigkeit von der Zeit T. Derartige Signalverläufe können in Schaltungsanordnungen 1 gemäß Figur 1A und 2 ermittelt werden.

Nach dem Einschalten der Ladungspumpe 14 mittels der Steueranordnung 2 steigt die Referenzspannung Vref_in sehr schnell auf ihren Endwert und bleibt dort. Entsprechend der Funktion des Rampensignalgenerators 30 steigt die Referenzausgangsspannung Vref_out langsam an und nähert sich dem Wert der Referenzspannung Vref_in.

Zu Beginn wird der Oszillator 10 und damit die Ladungspumpe 14 eingeschaltet, sodass die Ausgangsspannung Vhv zu steigen beginnt. Der Oszillator 10 bleibt eingeschaltet, so lange die heruntergeteilte Spannung Vcp unterhalb des Wertes der Referenzausgangsspannung Vref_out ist. Sobald die heruntergeteilte Spannung Vcp den Wert der Referenzausgangsspannung Vref_out erreicht, wird der Oszillator 10 ausgeschaltet. Fällt im weiteren Verlauf die heruntergeteilte Spannung Vcp unter die Referenzausgangsspannung Vref_out so wird der Oszillator 10 wieder eingeschaltet und die Ausgangsspannung Vhv beginnt anzusteigen.

In diesem beispielhaften Verlauf erreicht die Ausgangsspannung Vhv nach 300 Mikrosekunden den maximalen Wert. Mit Vorteil ist somit die Ausgangsspannung Vhv zum Programmieren und Löschen von Speicherzellen von nichtflüchtigen Speicherbausteinen einsetzbar.

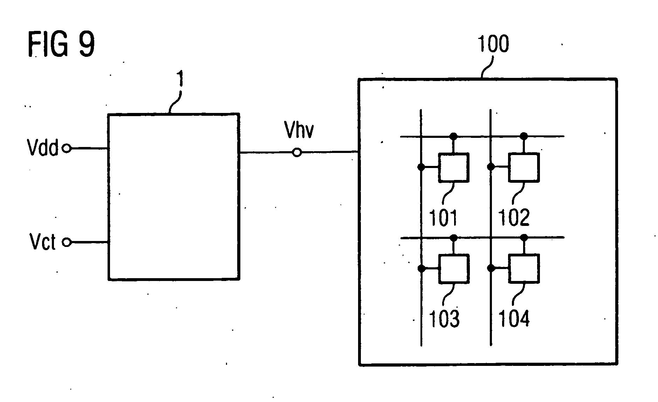

Figur 9 zeigt eine beispielhafte Speicheranordnung nach dem vorgeschlagenen Prinzip, in der die Schaltungsanordnung 1 zur Spannungsversorgung gemäß der Figur 1A, 1B oder 2 eingesetzt werden kann. Die Speicheranordnung umfasst die Schaltungsanordnung 1 zur Spannungsversorgung und eine Anordnung 100 mit mindestens einer Speicherzelle 101 bis 104.

### Bezugszeichenliste

- 1: Schaltungsanordnung
- 2: Steuerungsanordnung
- 3: erster Eingang
- 4: zweiter Eingang
- 5: erster Ausgang
- 6: zweiter Ausgang
- 7: Eingang
- 8: Bezugspotentialanschluss
- 9: Versorgungsspannungsanschluss
- 10: Oszillator
- 14: Ladungspumpe.
- 15: erster Eingang
- 16: zweiter Eingang
- 17: Ausgang
- 18: Bypass-Schaltung
- 19: Schalter
- 20: Spannungsteiler
- 21: Abgriffsknoten
- 22: erster Anschluss
- 23: Kondensator
- 24: zweiter Anschluss.
- 25: Komparator
- 26: erster Eingang
- 27: zweiter Eingang
- 28: Ausgang
- 29: Steuereingang
- 30: Rampensignalgenerator
- 31: Ausgang
- 32: Tiefpassfilter
- 33: Ansteuerungsoszillator
- 34: Integrator
- 35: Bandgap-Schaltung
- 36: Switched-Capacitor-Schaltung
- 37: erster Widerstand
- 38: zweiter Widerstand
- 39: Steuereingang
- 40, 41: Steuereingang
- 100: Anordnung
- 101 - 104: Speicherzellen
- 120: Transistor
- 121: Kondensator
- 122: Transistor
- 123: Taktgenerator
- 124: Steuereingang
- 125: Eingang
- 131 bis 141: Transistor
- 150: NAND-Gatter
- 151: Inverter
- 152 bis 156: Transistor
- 160: Transistor
- 161: Kondensator
- 162: Transistor
- 163: Puffer
- 164: Eingang
- 165: Steuereingang
- 166: Ausgang
- fosc: Oszillatorfrequenz
- f(T): Funktion der Temperatur
- HV CMOS: Hochspannungs-CMOS
- I1: erster Strom
- I2: zweiter Strom
- I3: dritter Strom
- LV CMOS: Niederspannungs-CMOS
- T: Temperatur
- t: Zeit
- Vc: Komparatorsignal
- Vcp: heruntergeteilte Spannung
- Vct: externes Steuersignal
- Vdd: Versorgungsspannung
- Vhv: Ausgangsspannung
- Vosc_out: Oszillatorsignal
- Vosc_sc: Ansteuersignal
- Vref_in: Referenzspannung
- Vref_out: Referenzausgangsspannung
- Vss: Bezugspotential
- Vs1: erstes Steuersignal

## Patentansprüche

1. Schaltungsanordnung zur Spannungsversorgung, umfassend
- eine Steuerungsanordnung (2),
- eine Ladungspumpe (14), der an einem ersten Eingang (15) eine Versorgungsspannung (Vdd) zuführbar ist und die einen Ausgang (17) zur Abgabe einer Ausgangsspannung (VHv) umfasst,
- einen Komparator (25), der an einem ersten Eingang (26) mit dem Ausgang (17) der Ladungspumpe (14) gekoppelt ist, der einen Ausgang (28) zur Abgabe eines Komparatorsignals (Vc) umfasst, wobei der Ausgang (28) des Komparators (25) mit einem ersten Eingang (3) der Steuerungsanordnung (2) gekoppelt ist, und
- einen Rampensignalgenerator (30), der eingangsseitig mit einem zweiten Ausgang (6) der Steuerungsanordnung (2) und an einem Ausgang (31) zur Abgabe einer Referenzausgangsspannung (Vref_out) mit einem zweiten Eingang (27) des Komparators (25) gekoppelt ist und ein Tiefpassfilter (32) umfasst, das dem Ausgang (31) des Rampensignalgenerators (30) vorgeschaltet ist und eine Switched-Capacitor-Schaltung (36) mit einer Tiefpasscharakteristik umfasst,
**dadurch gekennzeichnet, dass**
- der Rampensignalgenerator (30) eine Bandgap-Schaltung (35) umfasst, wobei die Bandgap-Schaltung (35) über das Tiefpassfilter (32) mit dem Ausgang (31) des Rampensignalgenerators (30) gekoppelt ist und ausgangsseitig mit einem Oszillator (10) zur Zuführung eines temperaturabhängigen Signals gekoppelt ist, und wobei
- der Oszillator (10) zwischen einen ersten Ausgang (5) der Steuerungsanordnung (2) und einen zweiten Eingang (16) der Ladungspumpe (14) geschaltet ist, der Oszillator (10) ausschaltbar ausgelegt ist und zur Abgabe eines Oszillatorsignal (Vosc_out) an die Ladungspumpe (14) ausgelegt ist und dazu ausgelegt ist, mit steigender Temperatur (T) das Oszillatorsignal (Vosc_out) mit einer steigenden Oszillatorfrequenz (fosc) abzugeben.

2. Schaltungsanordnung nach Anspruch 1,
**dadurch gekennzeichnet, dass**
der Rampensignalgenerator (30) zum Bereitstellen einer zeitlich ansteigenden Referenzausgangsspannung (Vref_out) ausgelegt ist.

3. Schaltungsanordnung nach Anspruch 1 oder 2,
**dadurch gekennzeichnet, dass**
der Rampensignalgenerator (30) einen Ansteueroszillator (33) umfasst, der zur Abgabe eines Ansteuersignals (Vosc_sc) an das Tiefpassfilter (32) zur Ansteuerung der Switched-Capacitor-Schaltung (36) vorgesehen ist.

4. Schaltungsanordnung nach einem der Ansprüche 1 bis 3,
**dadurch gekennzeichnet, dass**
die Schaltungsanordnung (1) einen Spannungsteiler (20) umfasst, der zwischen den Ausgang (17) der Ladungspumpe (14) und einen Bezugspotentialanschluss (8) geschaltet ist und an einem Abgriffsknoten (21) mit dem ersten Eingang (26) des Komparators (25) zur Abgabe einer heruntergeteilten Spannung (Vcp) gekoppelt ist.

5. Schaltungsanordnung nach Anspruch 4,
**dadurch gekennzeichnet, dass**
der Spannungsteiler (20) als Widerstände geschaltete Transistoren (131 bis 141) umfasst.

6. Schaltungsanordnung nach Anspruch 4 oder 5,
**dadurch gekennzeichnet, dass**
der Spannungsteiler (20) einen Kondensator (23) umfasst, der zwischen einen ersten Anschluss (22) des Spannungsteilers (20) und den Ausgang (21) des Spannungsteilers (20) geschaltet ist.

7. Schaltungsanordnung nach Anspruch 6,
**dadurch gekennzeichnet, dass**
der Kondensator (23) einen als Kondensator geschalteten Transistor (142) umfasst.

8. Schaltungsanordnung nach einem der Ansprüche 1 bis 7,
**dadurch gekennzeichnet, dass**
die Schaltungsanordnung (1) eine Bypass-Schaltung (18) umfasst, die zwischen den ersten Eingang (15) und den Ausgang (17) der Ladungspumpe (14) geschaltet ist und in einem Bypass-Betrieb zum Abgeben der Versorgungsspannung (Vdd) als Ausgangsspannung (VHv) vorgesehen ist.

9. Schaltungsanordnung nach Anspruch 8,
**dadurch gekennzeichnet, dass**
die Bypass-Schaltung (18) einen Schalter (19) umfasst, der zwischen den ersten Eingang (15) und den Ausgang (17) der Ladungspumpe (14) geschaltet ist.

10. Schaltungsanordnung nach einem der Ansprüche 1 bis 9,
**dadurch gekennzeichnet, dass**
die Bandgap-Schaltung (13) ausgangsseitig mit dem Komparator (20) zur Zuführung eines zweiten Stroms (12) verbunden ist.

11. Speicheranordnung, umfassend die Schaltungsanordnung zur Spannungsversorgung nach einem der Ansprüche 1 bis 10 und eine Anordnung (100) mit mindestens einer Speicherzelle (101, 102, 103, 104).

12. Verwendung einer Schaltungsanordnung nach einem der Ansprüche 1 bis 10 zur Spannungsversorgung eines Speicherbauteils oder eines Halbleiterspeichers.

13. Verfahren zum Betrieb einer Schaltungsanordnung zur Spannungsversorgung, umfassend folgende Schritte:
- Hochfahren einer Referenzausgangsspannung (Vref_out) in Form einer Rampenfunktion, wobei die Referenzausgangsspannung (Vref_out) durch eine Tiefpass-Filterung einer Referenzspannung (Vref_in) mittels einer Switched-Capacitor-Schaltung (36) generiert wird,
- Bereitstellen einer heruntergeteilten Spannung (Vcp) durch Herunterteilen einer Ausgangsspannung (Vhv) einer Ladungspumpe (14),
- Vergleichen der heruntergeteilten Spannung (Vcp) und der Referenzausgangsspannung (Vref_out), wobei in Abhängigkeit eines Vergleichs der heruntergeteilten Spannung (Vcp) und der Referenzausgangsspannung (Vref_out) ein Komparatorsignal (Vc) bereitgestellt wird, **gekennzeichnet durch** die Schritte
- Aktivieren der Ladungspumpe (14), falls der Betrag der heruntergeteilten Spannung (Vcp) kleiner als der Betrag der Referenzausgangsspannung (Vref_out) ist, und Deaktivieren der Ladungspumpe (14), falls der Betrag der heruntergeteilten Spannung (Vcp) größer als oder gleich dem Betrag der Referenzausgangsspannung (Vref_out) ist, in Abhängigkeit von dem Komparatorsignal (Vc) bereitstellen eines ersten Steuersignals (Vs1) wobei das einem Oszillator (10) zugeleitet wird,
in Abhängigkeit von dem ersten Steuersignal (Vs1) der Oszillator (10), der ausschaltbar ist, ausgangsseitig ein Oszillatorsignal (Vosc_out) bereitstellt, wobei
eine Bandgap-Schaltung (35) ausgangsseitig mit einem Eingang des Oszillators (10) zur Zuführung eines temperaturabhängigen Signals (I1) verbunden ist und das Oszillatorsignal (Vosc_out) somit bei einer höheren Temperatur eine höhere Oszillatorfrequenz (fosc) aufweist sowie entsprechend den Pulsen im Oszillatorsignal (Vosc_out) die Ladungspumpe (14) die Ausgangsspannung (Vhv) bereitstellt und die Referenzspannung (Vref_in) ausgangsseitig an der Bandgap-Schaltung (35) abgreifbar ist.

## Claims

1. A circuit arrangement for voltage supply, comprising
- a control arrangement (2),
- a charge pump (14) which may be fed with a supply voltage (Vdd) at a first input (15) and comprises an output (17) for delivering an output voltage (VHv),
- a comparator (25) coupled to the output (17) of the charge pump (14) at a first input (26) and comprising an output (28) for delivering a comparator signal (Vc), the output (28) of the comparator (25) being coupled to a first input (3) of the control arrangement (2), and
- a ramp signal generator (30) which has its input side coupled to a second output (6) of the control arrangement (2) and has an output (31) coupled to a second input (27) of the comparator (25) for delivering a reference output voltage (Vref_out), and comprises a low-pass filter (32) which is provided upstream of the output (31) of the ramp signal generator (30) and comprises a switched capacitor circuit (36) with a low-pass characteristic,
**characterized in that**
- the ramp signal generator (30) comprises a band gap circuit (35), said band gap circuit (35) being coupled to the output (31) of the ramp signal generator (30) via the low-pass filter (32) and having its output side coupled to an oscillator (10) for feeding a temperature-dependent signal, and
- the oscillator (10) being inserted between a first output (5) of the control arrangement (2) and a second input (16) of the charge pump (14), the oscillator (10) being designed such that it may be switched off and being designed for delivering an oscillator signal (Vosc_out) to the charge pump (14) and being designed for delivering the oscillator signal (Vosc_out) with an increasing oscillator frequency (fosc) when the temperature (T) increases.

2. The circuit arrangement according to claim 1,
**characterized in that**
the ramp signal generator (30) is designed for providing a reference output voltage (Vref_out) which increases over time.

3. The circuit arrangement according to claim 1 or 2,
**characterized in that**
the ramp signal generator (30) comprises a driving oscillator (33) provided for delivering a driving signal (Vosc_sc) to the low-pass filter (32) for driving the switched capacitor circuit (36).

4. The circuit arrangement according to any of the claims 1 to 3,
**characterized in that**
the circuit arrangement (1) comprises a voltage divider (20) which is inserted between the output (17) of the charge pump (14) and a reference potential terminal (8) and is coupled at a tap node (21) to the first input (26) of the comparator (25) for delivering a divided voltage (Vcp).

5. The circuit arrangement according to claim 4,
**characterized in that**
the voltage divider (20) comprises transistors (131 to 141) connected as resistors.

6. The circuit arrangement according to claim 4 or 5,
**characterized in that**
the voltage divider (20) comprises a capacitor (23) inserted between a first terminal (22) of the voltage divider (20) and the output (21) of the voltage divider (20).

7. The circuit arrangement according to claim 6,
**characterized in that**
the capacitor (23) comprises a transistor (142) connected as a capacitor.

8. The circuit arrangement according to any of the claims 1 to 7,
**characterized in that**
the circuit arrangement (1) comprises a bypass circuit (18) which is inserted between the first input (15) and the output (17) of the charge pump (14) and is provided in a bypass operation for supplying the supply voltage (Vdd) as the output voltage (VHv).

9. The circuit arrangement according to claim 8,
**characterized in that**
the bypass circuit (18) comprises a switch (19) inserted between the first input (15) and the output (17) of the charge pump (14).

10. The circuit arrangement according to one of claims 1 to 9,
**characterized in that**
the band gap circuit (13) has its output side connected to the comparator (20) for feeding a second current (I2).

11. A memory arrangement, comprising the circuit arrangement for voltage supply according to one of claims 1 to 10 and an arrangement (100) comprising at least one memory cell (101, 102, 103, 104).

12. Use of a circuit arrangement according to one of claims 1 to 10 for the voltage supply of a memory component or semiconductor memory.

13. A method for operating a circuit arrangement for voltage supply, comprising the following steps:
- stepping up a reference output voltage (Vref_out) in the form of a ramp function, the reference output voltage (Vref_out) being generated by low-pass filtering a reference voltage (Vref_in) by means of a switched capacitor circuit (36),
- providing a divided voltage (Vcp) by dividing an output voltage (Vhv) of a charge pump (14),
- comparing the divided voltage (Vcp) and the reference output voltage (Vref_out), a comparator signal (Vc) being provided depending on a comparison of the divided voltage (Vcp) and the reference output voltage (Vref_out),
**characterized by** the steps
activating the charge pump (14) if the amount of the divided voltage (Vcp) is smaller than the amount of the reference output voltage (Vref_out), and deactivating the charge pump (14) if the amount of the divided voltage (Vcp) is larger than or equal to the amount of the reference output voltage (Vref_out),
providing a first control signal (Vs1) depending on the comparator signal (Vc), said control signal being fed to an oscillator (10),
the oscillator (10), which may be switched off, providing an oscillator signal (Vosc_out) at its output side depending on the first control signal (Vs1),
a band gap circuit (35) having its output side connected to an input of the oscillator (10) for feeding a temperature-dependent signal (I1), the oscillator signal (Vosc_out) thus exhibiting a higher oscillator frequency (fosc) with higher temperature and
the charge pump (14) providing the output voltage (Vhv) corresponding to the pulses in the oscillator signal (Vosc_out) and the reference voltage (Vref_in) being able to be tapped at the output side of the band gap circuit (35).

## Revendications

1. Montage de circuit d'alimentation en tension, comportant
- un montage de commande (2),
- une pompe à charge (14) à laquelle une tension d'alimentation (Vdd) peut être amenée sur une première entrée (15) et qui comporte une sortie (17) destinée à émettre une tension de sortie (VHv),
- un comparateur (25) qui est couplé à la sortie (17) de la pompe à charge (14) sur une première entrée (26), qui comporte une sortie (28) destinée à émettre un signal de comparateur (Vc), la sortie (28) du comparateur (25) étant couplée à une première entrée (3) du montage de commande (2), et
- un générateur de signal en rampe (30) qui est couplé en entrée à une seconde sortie (6) du montage de commande (2) et, sur une sortie (31) destinée à émettre une tension de sortie de référence (Vref_out), à une seconde entrée (27) du comparateur (25), et qui comporte un filtre passe-bas (32) qui est monté en aval de la sortie (31) du générateur de signal en rampe (30) et qui comporte un montage à capacité commutée (36) présentant une caractéristique de filtre passe-bas,
**caractérisé en ce que**
- le générateur de signal en rampe (30) comporte un circuit à bande interdite (35), le circuit à bande interdite (35) étant couplé via le filtre passe-bas (32) à la sortie (31) du générateur de signal en rampe (30) et en sortie à un oscillateur (10) destiné à amener un signal dépendant de la température, et
- l'oscillateur (10) étant monté entre une première sortie (5) du montage de commande (2) et une seconde entrée (16) de la pompe à charge (14), l'oscillateur (10) étant conçu de manière à pouvoir être coupé, et à émettre un signal d'oscillateur (Vosc_out) à la pompe à charge (14) et à émettre le signal d'oscillateur (Vosc_out) avec une fréquence d'oscillateur croissante (fosc) au fur et à mesure que la température (T) augmente.

2. Montage de circuit selon la revendication 1,
**caractérisé en ce que**
le générateur de signal en rampe (30) est conçu pour fournir une tension de sortie de référence (Vref_out) qui augmente dans le temps.

3. Montage de circuit selon la revendication 1 ou 2,
**caractérisé en ce que**
le générateur de signal en rampe (30) comporte un oscillateur pilote (33) qui est prévu pour émettre un signal pilote (Vosc_sc) au filtre passe-bas (32) pour le pilotage du circuit à capacité commutée (36).

4. Montage de circuit selon l'une des revendications 1 à 3,
**caractérisé en ce que**
le montage de circuit (1) comporte un diviseur de tension (20) qui est monté entre la sortie (17) de la pompe à charge (14) et un raccord de potentiel de référence (8) et qui est couplé, sur un noeud de prise (21), à la première entrée (26) du comparateur (25) afin d'émettre une tension réduite par division (Vcp).

5. Montage de circuit selon la revendication 4,
**caractérisé en ce que**
le diviseur de tension (20) comporte des transistors (131 à 141) montés comme résistances.

6. Montage de circuit selon la revendication 4 ou 5,
**caractérisé en ce que**
le diviseur de tension (20) comporte un condensateur (23) qui est monté entre un premier raccord (22) du diviseur de tension (20) et la sortie (21) du diviseur de tension (20).

7. Montage de circuit selon la revendication 6,
**caractérisé en ce que**
le condensateur (23) comporte un transistor (142) monté comme condensateur.

8. Montage de circuit selon l'une des revendications 1 à 7,
**caractérisé en ce que**
le montage de circuit (1) comporte un circuit de dérivation (18) qui est monté entre la première entrée (15) et la sortie (17) de la pompe à charge (14) et qui est prévu pour émettre, dans un fonctionnement en dérivation, la tension d'alimentation (Vdd) comme tension de sortie (VHv).

9. Montage de circuit selon la revendication 8,
**caractérisé en ce que**
le circuit de dérivation (18) comporte un interrupteur (19) qui est monté entre la première entrée (15) et la sortie (17) de la pompe à charge (14).

10. Montage de circuit selon l'une des revendications 1 à 9,
**caractérisé en ce que** le circuit à bande interdite (13) est relié en sortie au comparateur (20) afin d'amener un second courant (12).

11. Montage de mémoire comportant le montage de circuit d'alimentation en tension selon l'une des revendications 1 à 10 et un montage (100) incluant au moins une cellule de mémoire (101, 102, 103, 104).

12. Utilisation d'un montage de circuit selon l'une des revendications 1 à 10 pour l'alimentation en tension d'un module de mémoire ou d'une mémoire à semiconducteurs.

13. Procédé de fonctionnement d'un montage de circuit d'alimentation en tension, comportant les étapes suivantes :
- démarrage d'une tension de sortie de référence (Vref_out) sous forme d'une fonction de rampe, la tension de sortie de référence (Vref_out) étant générée par un filtrage passe-bas d'une tension de référence (Vref_in) moyennant un circuit à capacité commutée (36),
- fourniture d'une tension réduite par division (Vcp) par division d'une tension de sortie (Vhv) d'une pompe à charge (14),
- comparaison de la tension réduite par division (Vcp) et de la tension de sortie de référence (Vref_out), un signal de comparateur (Vc) étant fourni en fonction d'une comparaison de la tension réduite par division (Vcp) et de la tension de sortie de référence (Vref_out),
**caractérisée par** les étapes suivantes :
activation de la pompe à charge (14) si la valeur de la tension réduite par division (Vcp) est inférieure à la valeur de la tension de sortie de référence (Vref_out), et désactivation de la pompe à charge (14) si la valeur de la tension réduite par division (Vcp) est supérieure ou égale à la valeur de la tension de sortie de référence (Vref_out),
fourniture, en fonction du signal de comparateur (Vc), d'un premier signal de commande (Vs1) qui est transmis à un oscillateur (10),
l'oscillateur (10), qui peut être coupé, fournissant en sortie un signal d'oscillateur (Vosc_out) en fonction du premier signal de commande (Vs1),
un circuit à bande interdite (35) étant relié en sortie à une entrée de l'oscillateur (10) pour amener un signal dépendant de la température (I1), et le signal d'oscillateur (Vosc_out) présentant de ce fait une fréquence d'oscillateur supérieure (fosc) lorsque la température est supérieure, et
la pompe à charge (14) fournissant la tension de sortie (Vhv) conformément aux impulsions dans le signal d'oscillateur (Vosc_out) et la tension de référence (Vref_in) pouvant être prélevée en sortie sur le circuit à bande interdite (35).
